# NEUE EUROPÄISCHE PATENTSCHRIFT

(11) **EP 1 776 686 B3**
(45) Veröffentlichungstag dieser Patentschrift: **10.12.2014**
(45) Hinweis auf die Patenterteilung: 11.11.2009
(21) Anmeldenummer: 05770305.0
(22) Anmeldetag: 09.08.2005
(51) Int. Cl.: G08G 1/005, G01C 21/26

(54) **VERFAHREN UND VORRICHTUNG ZUR ANZEIGE VON WEGINFORMATIONEN**
METHOD AND DEVICE FOR DISPLAYING ROUTE INFORMATION
PROCEDE ET APPAREIL D'AFFICHAGE D'INFORMATIONS D'ITINERAIRE

(30) Priorität: 10.08.2004 AT 13632004
(43) Veröffentlichungstag der Anmeldung: 25.04.2007
(73) Patentinhaber: Krobath, Thomas, 5700 Zell am See (AT)
(72) Erfinder: Krobath, Thomas, 5700 Zell am See (AT)
(74) Vertreter: Geitz Truckenmüller Lucht
(86) Internationale Anmeldenummer: PCT/AT2005/000322
(87) Internationale Veröffentlichungsnummer: WO 2006/015399

(56) Entgegenhaltungen:
- EP-A- 1 394 760
- DE-A1- 10 205 080
- DE-U1- 20 202 616
- US-A1- 2002 067 259
- US-B1- 6 205 396
- US-B1- 6 424 264

## Beschreibung

Die Erfindung betrifft ein Verfahren zur Anzeige von Weginformationen für Personen innerhalb eines vorbestimmten Gebiets, wobei an einer Vielzahl von Orientierungspunkten Weginformationseinheiten bereitgestellt werden, mit folgenden Schritten:
- Identifizieren einer Person und Feststellen mindestens einer Destination, zu der die Person geführt werden soll;
- Erfassen der Person an mindestens einer Weginformationseinheit (20),
sowie eine Vorrichtung zur Anzeige von Weginformationen für Personen innerhalb eines vorbestimmten Gebiets, mit einer Zentraleinheit, in der Information über die Topographie des Gebiets gespeichert ist, und mit einer Vielzahl von an Orientierungspunkten bereitgestellten Weginformationseinheiten, wobei zumindest eine Identifikationseinheit vorgesehen ist, um die Person zu identifizieren und eine Destination einzulesen, und wobei die Weginformationseinheiten dazu ausgebildet sind, die Person zu erfassen und eine Anzeigeeinheit aufweisen, um nach der Erfassung Informationen über den weiteren Weg der Person zur gewünschten Destination anzuzeigen.

Eine solche Vorrichtung ist bereits aus der DE 102 05 080 A1 vorbekannt. Es handelt sich dabei um ein Besucherführungssystem für einen festgelegten Bereich. Beim Betreten des festgelegten Bereichs erhalten die Besucher einen mobilen Datenträger, auf dem für den jeweiligen Besucher relevante Daten, wie etwa dessen Zielpunkt oder Zugangsberechtigungen gespeichert sind. Sobald sich der Besucher innerhalb des festgelegten Bereichs bewegt, tritt der mobile Datenträger, vorzugsweise kontaktlos, mit dem festgelegten Bereich verteilt angeordneten Leseeinrichtungen in Datenverbindung, woraufhin dem Besucher visuell oder akustisch Informationen über seinen weiteren Weg mitgeteilt werden.

Ein weiteres Leitsystem ist bereits aus der US 6,205,396 B1 bekannt. Auch hier erhält der Besucher eines definierten Bereichs einen mobilen Einheit mit einer Speichereinheit, in der der Zielpunkt des Benutzers gespeichert ist und die über einen Transmitter verfügt, der Signale sendet über die der Besucher innerhalb des definierten Bereichs von einer Zentraleinheit geortet werden kann, sowie innerhalb des definierten Bereichs angeordnete Signaleinrichtungen, die ebenfalls mit dieser Zentraleinheit in Datenverbindung stehen. Die Zentraleinheit nimmt dann in Abhängigkeit vom individuellen Ziel und der momentanen Position des Benutzers eine individuelle Wegweisung innerhalb des definierten Bereichs mittels der Signaleinrichtungen vor. Der Datenaustausch mit der mobilen Einheit des Benutzers erfolgt dabei vorzugsweise über Infrarotsignale.

Außerdem ist es aus der US 6, 424, 264 B1 bekannt Individuen innerhalb eines definierten Geländes anhand von ID-Tags zu orten, die den Personen ausgehändigt werden und die mit in dem fraglichen Gelände strategisch verteilt angeordneten ID-Stationen in Datenaustausch treten. Hier findet der Datenaustausch ebenfalls drahtlos über die bekannte RFID-Technik statt.

Das Anzeigen von Information über den weiteren Weg der Person zur gewünschten Destination in Gebäudekomplexen oder auch größeren Gebieten ist ein Problem, das bisher unzureichend gelöst ist. Die Ausstattung von solchen Gebieten mit allgemeinen Informationseinheiten wie etwa Wegweisern ist meist nicht in der Lage, eine problemlose Navigation der einzelnen Personen zu den von ihnen gewählten Destinationen sicherzustellen. Um dieses Problem zu lösen, ist vorgeschlagen worden, die Personen mit Navigationshilfen zu versehen, die Informationen anzeigen, um zur gewünschten Destination zu gelangen. Solche Personenleitsysteme sind in der DE 202 02 616 U, der DE 100 59 153 A und der DE 197 52 104 A beschrieben. Nachteilig bei solchen Lösungen ist, dass für eine große Vielzahl von Personen Geräte bereitgestellt werden müssen, die über eine Kommunikationsschnittstelle verfügen und darüber hinaus eine Anzeigeeinheit aufweisen, die die Informationen für die jeweilige Person ausgibt. Solche Personenleitsysteme sind daher sehr aufwendig und können in vielen Fällen aus Kostengründen nicht realisiert werden.

Es sind verschiedene Weginformationssysteme bekannt, bei denen ein Identifikationsmittel, wie etwa eine Magnetkarte, in eine entsprechende Informationseinheit eingeschoben werden muss, um eine Weganzeige zu erhalten. Solche Lösungen sind beispielsweise in der DE 24 25 893 A oder der DE 44 31 780 A beschrieben. Diese Systeme setzen stets eine aktive Manipulation der Person an den Punkten voraus, an denen Weginformation gewünscht und erforderlich ist. Weiters ist es erforderlich, dem Anwender das Identifikationsmittel direkt, d.h. körperlich zu übergeben oder zuzustellen, so dass hier gewisse Einschränkungen bei der Anwendung resultieren.

Aufgabe der vorliegenden Erfindung ist es, ein Verfahren anzugeben, mit dem Personen sicher und zuverlässig mit Informationen versorgt werden können, um zu den von ihnen gewünschten Destinationen zu gelangen und dieses Verfahren so auszugestalten, dass der apparative Aufwand zur Realisierung möglichst gering ist. Dabei soll die Verweildauer der Person vor den Weginformationseinheiten möglichst gering gehalten werden.

Eine weitere Aufgabe der vorliegenden Erfindung ist es, das Verfahren für die beteiligten Personen möglichst einfach zu gestalten und den Personalaufwand, der zur Durchführung des Verfahrens notwendig ist, zu minimieren. Insbesondere soll dabei erreicht werden, die Übergabe des Identifikationsmittels möglichst einfach zu gestalten und hier alle Wege für die organisatorische Abwicklung offen zu halten.

Weiters ist es eine Aufgabe der Erfindung, eine Vorrichtung anzugeben, die die Durchführung des Verfahrens in einfacher und kostengünstiger Weise ermöglicht.

Bei dem erfindungsgemäßen Verfahren werden zur Lösung der oben gestellten Aufgabe innerhalb des vorbestimmten Gebietes zunächst an einer Vielzahl von Orientierungspunkten Weginformationseinheiten bereitgestellt. Als Orientierungspunkte werden dabei solche Stellen bezeichnet, an denen eine Orientierung erforderlich ist, da es mehrere Möglichkeiten für den weiteren Weg gibt, wie etwa Kreuzungspunkte oder Weggabelungen.

Im Einzelnen werden bei dem erfindungsgemäßen Verfahren folgende Schritte ausgeführt:
- Identifizieren einer Person und Feststellen mindestens einer Destination, zu der die Person geführt werden soll;
- Erfassen der Person an mindestens einer Weginformationseinheit;
- Anzeigen von Information über den weiteren Weg der Person zur gewünschten Destination.

Erfindungsgemäß wird dabei die Identifikation der Person berührungslos durchgeführt. Berührungslos im Sinn der Erfindung bedeutet beispielsweise eine optische Abtastung eines Informationsträgers, die grundsätzlich über eine bestimmte Entfernung erfolgen kann, auch wenn es möglich ist, den Informationsträger so nahe an eine Lesevorrichtung zu halten, dass eine körperliche Berührung erfolgt.

Dabei trägt der Beleg einen zweidimensionalen Barcode und die Weg-information (WO, Wn) wird automatisiert aus den persönlichen Daten abgeleitet, die durch Identifikation der Person erhalten werden, indem die Weginformation (WO, Wn), die zentral für alle Personen in einem Speicher (12, 13, 14) einer Zentraleinheit (10) gespeichert ist, hierzu jeweils aus dieser Zentraleinheit (10) bezogen wird. Des Weiteren wird der Barcode als Bilddatensatz an ein Mobiltelefon übermittelt, so dass die Anzeige des Mobiltelefons als Identifikationseinrichtung dient.

Mit der erfindungsgemäßen Lösung ist es möglich, den Erhalt der Informationen wesentlich zu erleichtern, ohne in körperlichen Kontakt mit der entsprechenden Vorrichtung zu treten. Darüber hinaus kann aufgrund der geringeren Verweildauer der einzelnen Personen vor dem Gerät die Kapazität wesentlich erhöht werden, wodurch mit einer Vorrichtung einer wesentlichen größeren Anzahl von Personen in einer gegebenen Zeiteinheit eine entsprechende Information gegeben werden kann.

Mit dem Identifizieren einer Person ist beim erfindungsgemäßen Verfahren nicht zwangsläufig gemeint, dass sich die Person legitimieren muss, das heißt, dass Name, Adresse oder sonstige Daten bestimmt werden.

Identifikation im Sinn der Erfindung bedeutet lediglich, dass die Person für den Zeitraum, in dem die Weginformation angeboten werden soll, wiedererkennbar gemacht wird. Dies erfolgt in zweckmäßiger Weise beim Betreten des entsprechenden Gebietes. Während ihres Weges zu der gewünschten Destination gelangt die Person wiederholt zu den im Gebiet verteilten Weginformationseinheiten, um weitere Informationen über den Weg zu erhalten. Die Erfassung der Person an den Weginformationseinheiten erfolgt dabei beispielsweise dann, wenn die Person sich der Weginformationseinheit in einem vorbestimmten Ausmaß annähert automatisch, oder durch eine aktive Handlung der Person, wie beispielsweise das Auflegen der Hand auf ein entsprechendes Erkennungsgerät. Nachdem die Person auf diese Weise an der Weginformationseinheit erfasst worden ist, erfolgt die persönlich für die jeweilige Person bestimmte Information über den weiteren Weg zur Destination.

Es ist festzuhalten, dass das Feststellen der Destination ein Eingabevorgang sein kann, aber auch dadurch bewirkt werden kann, dass an einem bestimmten Ort eine Identifikation stattfindet, wodurch dieser Ort als Destination festgestellt wird.

Im Rahmen des erfindungsgemäßen Verfahrens ist hierzu vorgesehen, dass die einzelnen Personen durch eine Identifikationseinrichtung identifiziert werden, die sie am Beginn erhalten oder bereits mitbringen. Das Identifizieren der Personen erfolgt über das Einlesen eines Belegs, der einen zweidimensionalen Barcode trägt. Diese Lösung überwindet die Beschränkung, dass dem Anwender eine Informationsträger physisch ausgehändigt oder zugestellt werden muss. Es ist auf diese Weise nicht nur möglich, einen Ausweis, ein Flugticket, eine Parkkarte oder dergleichen als Identifikationseinrichtung oder als Träger für eine solche zu verwenden, es kann der Barcode auch per telefax, per e-mail oder dergleichen übermittelt werden, was die organisatorische Abwicklung erheblich vereinfacht.

Dieser Barcode besteht aus einer Kombination von schwarzen und weißen Rechtecken. Jedes Feld symbolisiert ein Bit. Eingelesen wird der Code mittels eines dazu geeigneten Blidscanners. Durch den gegenüber herkömmlichen Barcodes erheblich gesteigerten I n-formationsgehalt können auch entsprechende Sicherheitskriterien erfüllt werden. Die Informationsübertragung über solche zweidimensionalen Barcodes ist an sich bekannt, es wird hier nur beispielhaft auf die US 5, 862,270 A und die DE 100 25 332 A verwiesen.

Im Rahmen des erfindungsgemäßen Verfahrens wird die Weg-information zentral für alle Personen gespeichert. Hierdurch ist es möglich, die Identifikationseinrichtung besonders einfach auszubilden, da diese nur einen einzigen Datensatz speichern muss, nämlich einen Code, der die Identifikationseinrichtung kennzeichnet und damit der Erkennung der Person dient. Nach dem Erfassen der Person wird von der Weginformationseinheit eine entsprechende Anfrage an die Zentraleinheit abgesetzt, die aufgrund der für diese abgespeicherten Destination die erforderliche Ausgabe oder Anzeige berechnet und an die Weginformationseinheit zurückgibt, die diese anzeigt beziehungsweise ausgibt. Bei dieser Ausführungsvariante ist klarerweise eine Vernetzung der Weginformationseinheiten mit einer Zentraleinheit erforderlich.

Wesentlich an der vorliegenden Erfindung ist, dass die Identifikationseinrichtungen sehrkostengünstig sind, da sie keinerlei Anzeigeeinheiten oder dergleichen enthalten.

Zusätzlich dazu ist es auch möglich, dass die Person bei der Identifikation biometrisch vermessen wird. Dies kann auf vielfältige Weise geschehen. So kann die Vermessungfotografisch erfolgen, indem ein Bildvon der Person erzeugt wird, das zur weiteren Erkennung verwendetwird. Alternativ dazu kann beispielsweise eine Hand der Person vermessen werden, um die Identifikation zu ermöglichen. Die Weginformationseinheiten sind dementsprechend ausgebildet, um die Person bei Bedarf wiederzuerkennen.

Eine weitere Vereinfachung und Erleichterung der Durchführung des erfindungsgemäßen Verfahrens wird dadurch erreicht werden, dass die Weginformation automatisiert aus persönlichen Daten abgeleitet wird, die durch Legitimation der Person erhalten werden. In vielen Fällen ist der Person beim Eintreten in das Gebiet die genaue Destination selbst nicht bekannt. So muss etwa in einem Amtsgebäude der für die Person zuständige Referent und sein Büro erst ermittelt werden, oder es muss in einem Krankenhaus der Besucher den Aufenthaltsort seines zu besuchenden Verwandten erst herausfinden. Wenn nun die Person beim Eintreten in das Gebiet nicht nur identifiziert wird, sondern sich auch legitimiert, indem sie beispielsweise einen Ausweis, eine Kreditkarte oder dergleichen in eine entsprechende Leseeinrichtung einlegt, so kann in vielen Fällen die Destination automatisch aus vorhandenen Daten abgeleitet werden oder es kann zumindest auf automatisiertem Wege eine Unterstützung beim Auffinden der korrekten Destination gegeben werden. Dies bedeutet, dass der Personalaufwand für Informationsstellen oder -schalter, die Personen bei der Auffindung ihrer jeweiligen Ziele beraten, minimiert werden kann.

Besonders günstig ist es, wenn nach Erreichen der Destination Weginformation angeboten wird, die den Rückweg der Person betrifft. Dies ist zum Beispiel vorteilhaft, wenn nach einer Flugreise der Weg zu einem in einem Parkhaus abgestellten Kraftfahrzeug angezeigt wird.

Beim erfindungsgemäßen Verfahren kann die Anzeige der Weginformation auf vielfältige Art erfolgen. Bevorzugt ist eine grafische Anzeige durch Pfeile, Planausschnitte oder andere grafische Darstellungen der jeweiligen Umgebung. Zusätzlich dazu können Informationen in verbaler Form (schriftlich oder akustisch) angeboten werden, wie etwa die Ausgabe: "Dritte Tür links". Je nach Einsatzzweck können die Informationen auch auf akustischem Wege angeboten werden. In den beiden letzteren Varianten ist es selbstverständlich möglich, Informationen in verschiedenen Sprachen nach Wahl der benützenden Person auszugeben.

Weiters betrifft die Erfindung eine Vorrichtung zur Anzeige von Weginformation für Personen innerhalb eines vorbestimmten Gebietes mit einer Zentraleinheit, in der Information über die Topografie des Gebietes gespeichert ist und mit einer Vielzahl von an Orientierungspunkten bereitgestellten Weginformationseinheiten. Erfindungsgemäß ist diese Vorrichtung dadurch gekennzeichnet, dass zumindest eine Identifikationseinheit vorgesehen ist, um die Person zu identifizieren und eine Destination einzulesen und dass die Weginformationseinheiten dazu ausgebildet sind, die Person zu erfassen und nach Erfassung Informationen über den weiteren Weg der Person zur gewünschten Destination anzuzeigen.

In der Folge wird anhand von Beispielen die Anwendbarkeit des erfindungsgemäßen Verfahrens erläutert.

### Beispiel 2

Bei diesem Ausführungsbeispiel besteht die Aufgabe darin, die Orientierung einer Vielzahl von Personen in einem Krankenhaus zu erleichtern. Bei diesen Personen kann es sich um Patienten handeln, die einen bestimmten Behandlungsraum aufsuchen möchten, unabhängig davon, ob diese Patienten stationär oder ambulant betreut sind. Weitere Personen deren Orientierung unterstützt werden soll, sind Angehörige, die Patienten besuchen wollen, aber auch weitere Personen, wie etwa Lieferanten, Pharmavertreter und dergleichen.

Im Eingangsbereich des Krankenhauses stehen Identifikationseinheiten bereit, die einerseits eine biometrische Vermessung der Person vornehmen, indem beispielsweise Videobildervom Gesicht angefertigt werden, und die andererseits automationsunterstützt Informationen über die gewünschte Destination bereitstellen. So kann beispielsweise über eine Tastatur der Name einer zu besuchenden Person eingegeben werden. Gegebenenfalls steht Hilfspersonal zur Verfügung, um bei der Bestimmung der gewünschten Destination zu helfen.

Es ist aber auch möglich, bei eventuellen Verständigungen von Angehörigen, diesen einen zweidimensionalen Barcode zur Verfügung zu stellen, indem dieser mit einem Telefax, e-mail oder dergleichen beigegeben wird. Der besondere Vorteil besteht darin, dass in diesem Fall keine weitere Manipulation erforderlich ist.

Nachdem die Destination festgelegt worden ist, wird eine anfängliche Information angezeigt, wie beispielsweise die Nummer des gewünschten Raumes und Angaben über die erste Wegstrecke. In weiterer Folge bewegt sich die Person auf die gewünschte Destination zu, wobei sie jedes Mal dann, wenn sie sich über den weiteren Weg nicht im Klaren ist, eine Weginformationseinheit über den weiteren Weg "befragen" kann. Diese Weginformationseinheiten sind über das gesamt Gebiet des Krankenhauses verteilt und insbesondere an Kreuzungspunkten und Abzweigungen aufgestellt. Sobald sich die Person im Erfassungsbereich einer Erkennungseinheit befindet, wird sie identifiziert und es wird über das Netzwerk eine entsprechende Anfrage an eine Zentraleinheit abgesetzt. In der Zentraleinheit ist die gewünschte Destination für diese Person gespeichert und es kann somit der weitere Weg berechnet und an die Weginformationseinheit zurückgegeben werden, die diese anzeigt. Der besondere Vorteil dieses Systems liegt darin, dass auch dann wenn die Person den vorgegebenen bzw. vorgeschlagenen Weg verlassen hat, stets korrekte Weginformationen angezeigt werden. Ein weiterer Vorteil liegt in der Tatsache, dass selbst dann, wenn in dem Zeitraum zwischen der Übermittlung der Identifikationsdaten (z.B. des 2D-Barcodes) und dem tatsächlichen Besuch der Person eine Verlegung der Zielperson stattgefunden hat, nach wie vor die korrekte Weginformation angezeigt werden kann. Dies wäre nicht der Fall, wenn der Person lediglich die Zieladresse, wie etwa die Zimmemummer, übermittelt wird.

### Beispiel 3

Bei diesem Beispiel geht es darum, die Orientierung in einem Flughafen bzw. Flughafengelände zu erleichtern. Personen, die beispielsweise eine Flugreise antreten, erhalten mit ihrem Flugticket einen 2D-Barcode, den zu diesem Zweck verwendet wird, was den Vorteil hat, dass auch Flugtickets, die on-line gebucht und vom Passagier ausgedruckt worden sind, verwendbar sind.

Sobald die Person ihr Kraftfahrzeug in einem Parkhaus abgestellt hat, kann sie sich an einer in der Nähe befindlichen Weginformationseinheit melden, indem das Flugticket in den Erfassungsbereich einer Sende-Empfangseinheit gebracht wird. Dadurch kann an einer Zentraleinheit der Ort gespeichert werden, an dem Kraftfahrzeug abgestellt ist und die Person somit bei Bedarf wieder zu diesem zurückgeführt werden. In weiterer Folge wird die Person zunächst zum richtigen Eincheckschalter und danach zum richtigen Gate geführt, was insofern möglich ist, als die Zentraleinheit Zugriff auf die entsprechenden Daten hat. Ein weiterer besonderer Vorteil dieser Ausführungsvariante ist, dass die Weginformationseinheiten auch für die betreffende Person relevante Daten ausgeben können, wie etwa die aktuelle Verspätung des betreffenden Fluges und dergleichen.

Weitere Vorteile dieser Lösung bestehen darin, dass der Verbleib und ungefähre Aufenthaltsort von Personen, die einen bestimmten Flug gebucht haben, feststellbar ist, so dass die Entscheidung erleichtert wird, ob ein Flugzeug auf diese Person warten soll oder nicht. Auch die Suche nach bestimmten Personen, die sich auf ihrem Weg zum Zielort befinden, wird so erleichtert. Eine weitere Zusatzfunktionalität besteht darin, dass bestimmte Personen, deren Flug unmittelbar vor dem Ende der Boardingphase steht, beim Einchecken oder bei Sicherheitskontrollen speziellen Schaltern mit beschleunigter Abfertigung zugewiesen werden, um Verzögerungen zu vermeiden.

Wie oben ausgeführt, kann die Person nach Beendigung der Flugreise zum Abstellplatz ihres Kraftfahrzeuges geführt werden.

Die Erfindung wird im Folgenden anhand der in den Figuren dargestellten Ausführungsbeispiele näher erläutert. Es zeigen:
- Fig. 1: ein Flussdiagramm, das den Ablauf des Verfahrens der ersten Ausführungsvariante zeigt ;
- Fig. 2: ein Blockdiagramm einer ersten Variante der erfindungsgemäßen Vorrichtung.

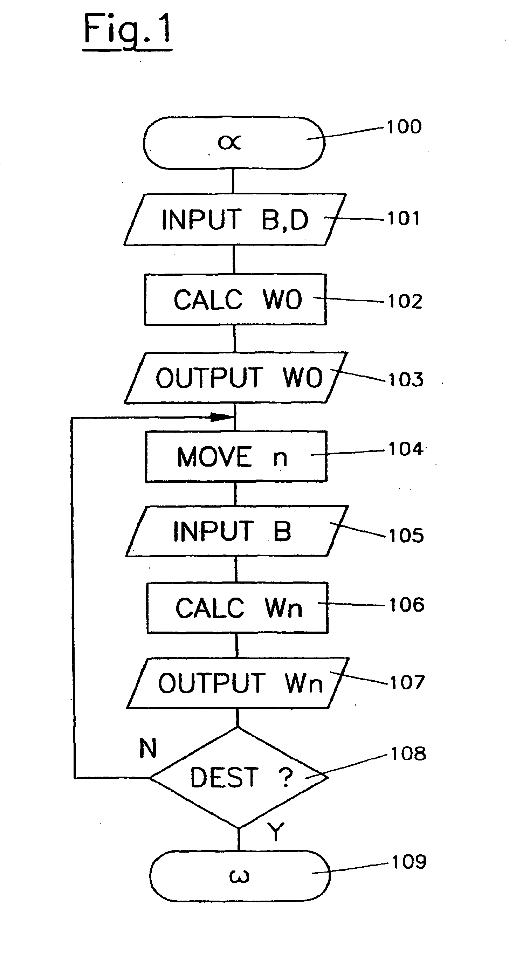

In dem Flussdiagramm von Fig. 1 wird das Verfahren in Schritt 100 begonnen, bei dem die Person in das Gebiet eintritt, das wie im obigen Beispiel 1 ein Krankenhaus ist. In Schritt 101 (INPUT B, D) wird in einem Rezeptionsbereich eine Identifikation der Person durchgeführt. Weiter wird die gewünschte Destination D der Person eingegeben, d.h. ein bestimmtes Behandlungszimmer für eine Behandlung oder ein Krankenzimmer, in dem ein Besuch abgestattet werden soll. Die Eingabe kann durch die Person selbst erfolgen, indem diese an einem Terminal die erforderlichen Daten eingibt, wie etwa den Namen der zu besuchenden Person, oder durch Personal an einem Informationsschalter.

In Schritt 102 (CALC WO) wird eine erste Weginformation WO berechnet und in Schritt 103 (OU-PUT WO) ausgegeben. Diese enthält allgemeine Informationen, wie etwa die Nummerdes die Destination darstellenden Raums, und Informationen über die anfängliche Wegstrecke. Die Information kann verbal sein, wie etwa die Ausgabe: "Gehen Sie geradeaus zum Lift" oder nonverbal in Form von Pfeilen oder Piktogrammen.

Im nächsten Schritt 104 (MOVE n) bewegt sich die Person in dem Gebiet weiter, wobei es für das Verfahren unerheblich ist, ob die Person dabei den erhaltenen Informationen folgt, oder aus welchen Gründen auch immer davon abweicht. Sobald die Person das Bedürfnis nach weiterer Information hat, kann sie sich an der nächsten Weginformationseinheit identifizieren, indem sie beispielsweise in Erfassungsbereich der Gesichtserkennung eintritt. Somit werden in Schritt 105 (INPUT B) erneut die biometrischen Daten eingelesen, und in Schritt 106 (CALC Wn) wird die passende Weginformation für die n-te Wegstrecke vom gegenwärtigen Standpunkt aus berechnet. In Schritt 107 (OUTPUT Wn) diese Information ausgegeben. In Schritt 108 (DEST ?) wird entschieden, ob die gewünschte Destination erreicht ist, und wenn nicht, kehrt das Programm zu Schritt 104 zurück. Ist die gewünschte Destination erreicht, endet das Programm in Schritt 109.

Nach Erreichen der Destination D kann in einer in diesem Flussdiagramm nicht dargestellten Ausführungsvariante der Ausgang des Krankenhauses als neue Destination festgelegt werden, um die Person analog zum oben beschriebenen Verfahren zum Ausgang zu führen.

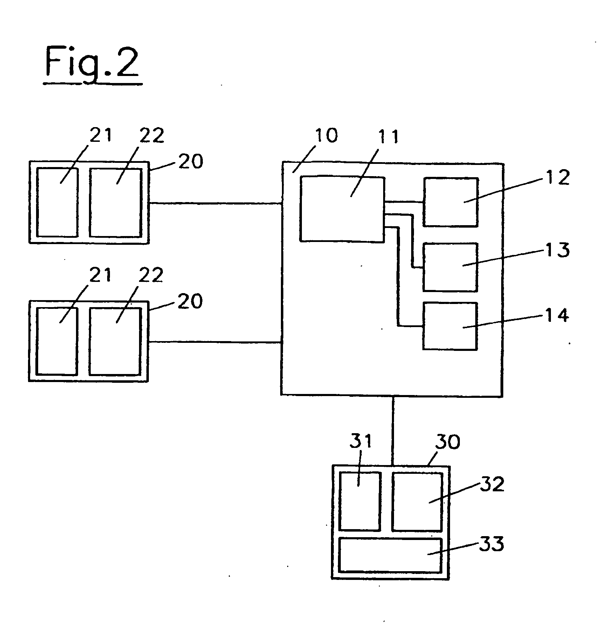

Fig. 2 zeigt in der Form eines Blockdiagramms die für das System erforderlichen Komponenten. Eine Zentraleinheit 10 besitzt eine Berechnungseinheit 11, einen ersten Speicher 12, einen zweiten Speicher 13 und einen dritten Speicher 14. Im ersten Speicher 12 sind die allgemeinen Information über das betreffende Gebiet, wie etwa die Topographie und andere für die Durchführung der Verfahrens relevante Informationen gespeichert. Im konkreten Beispiel sind das die einzelnen Räume des Krankenhauses, ihre Lage und die zurVerfügung stehenden Verkehrswege, wie Gänge, Treppen und Lifte. Darüber hinaus enthält der erste Speicher 12 Daten über den Aufenthaltsort aller Patienten und dgl.

Derzweite Speicher 13 enthält die in Schritt 101 eingelesenen Daten, also die biometrischen Daten B und die Daten D über die gewünschte Destination. Im optionalen dritten Speicher 14 wird Information über die bis-herige Bewegung der Person gesammelt, um beispielsweise feststellen zu können, ob unzulässige oder unerwünschte Bewegungen vorliegen oder nicht und/oder um es der Person zu ermöglichen, zuvor aufgesuchte Orte wiederzufinden.

In der Berechnungseinheit 11 werden die erforderlichen Berechnungen durchgeführt.

Die Zentraleinheit 10 ist mit einer Mehrzahl von Weginformationseinheiten 20verbunden, die jeweils aus einer Erkennungseinheit 21 und einer Anzeigeeinheit 22, beispielsweise in der Form eines Bildschirms bestehen. Weiters ist die Zentraleinheit 10 mit einer Identifikationseinheit 30 verbunden, die eine Vermessungseinheit 31, eine Anzeigeeinheit 32 und eine Eingabeeinheit 33 aufweist.

Mit dem erfindungsgemäßen System ist es möglich, auf kostengünstige Weise individuell optimierte Informationen für eine Vielzahl von Personen in einem differenziert strukturierten Gebiet bereitzustellen.

## Patentansprüche

1. Verfahren zur Anzeige von Weginformation (W0, Wn) für Personen innerhalb eines vorbestimmten Gebiets, wobei an einer Vielzahl von Orientierungspunkten Weginformationseinheiten (20) bereitgestellt werden, mit folgenden Schritten:
- Identifizieren einer Person und Feststellen mindestens einer Destination (D), zu der die Person geführt werden soll;
- Erfassen der Person an mindestens einer Weginformationseinheit (20);
- Anzeigen von Information (W0, Wn) über den weiteren Weg der Person zur gewünschten Destination (D).
**dadurch gekennzeichnet, dass** das **selbsttätige** Identifizieren der Person berührungslos über das Einlesen eines Belegs **mittels einer Erkennungseinheit (21) der Weginformationseinheit (20)** erfolgt, wobei der Beleg einen zweidimensionalen Barcode trägt, und die Weginformation (W0, Wn) automatisiert aus den persönlichen Daten abgeleitet wird, die durch Identifikation der Person erhalten werden, indem die Weginformation (W0, Wn), die zentral für alle Personen in einem Speicher (12, 13, 14) einer Zentraleinheit (10) gespeichert ist, hierzu jeweils aus dieser Zentraleinheit (10) bezogen wird und wobei der zweidimensionale Barcode als Bilddatensatz an ein Mobiltelefon übermittelt wird und im weiteren die Anzeige dieses Mobiltelefons als Identifikationseinrichtung dient.

2. Verfahren nach Anspruch 1, **dadurch gekennzeichnet, dass** die Person bei der Identifikation zusätzlich biometrisch vermessen wird.

3. Verfahren nach einem der Ansprüche 1 bis 2, **dadurch gekennzeichnet, dass** nach Erreichen der Destination (D) Weginformation (W0, Wn) angezeigt wird, die den Rückweg betrifft und hierzu jeweils aus dieser Zentraleinheit (10) bezogen wird.

4. Verfahren nach einem der Ansprüche 1 bis 3, **dadurch gekennzeichnet, dass** die Weginformation (W0, Wn) akustisch und/oder grafisch angezeigt wird.

5. Vorrichtung zur Anzeige von Weginformation für Personen innerhalb eines vorbestimmten Gebiets, mit einer Zentraleinheit (10), in der Information über die Topographie des Gebiets gespeichert ist, und mit einer Vielzahl von an Orientierungspunkten bereitgestellten Weginformationseinheiten (20), wobei zumindest eine Identifikationseinheit (30) vorgesehen ist, um die Person zu identifizieren und eine Destination (D) einzulesen, und wobei die Weginformationseinheiten (20) dazu ausgebildet sind, die Person zu erfassen und eine Anzeigeeinheit (22) aufweisen, um nach der Erfassung Informationen (W0, Wn) über den weiteren Weg der Person zur gewünschten Destination (D) anzuzeigen, **dadurch gekennzeichnet, dass** die Weginformationseinheiten (20) Kommunikationsschnittstellen (24) zur berührungslosen Datenübertragung mit den Identifikationseinrichtungen, nämlich eine Leseeinrichtungen für zweidimensionale Barcodes, aufweisen und eine Zuordnungseinheit umfasst, die Weginformation automatisiert aus persönlichen Daten ableitet, die durch die Identifikation der Person erhalten werden, indem die Weginformation (W0, Wn), die zentral für alle Personen in einem Speicher (12, 13, 14) der Zentraleinheit (10) gespeichert ist, hierzu jeweils aus dieser Zentraleinheit (10) beziehbar ist, wobei die Identifikation der Person über das Einlesen eines Belegs erfolgt, der einen zweidimensionalen Barcode trägt und wobei dieser zweidimensionale Barcode als Bilddatensatz an ein Mobiltelefon übermittelbar ist, so dass die Anzeige des Mobiltelefons im weiteren als Identifikationseinrichtung einsetzbar ist.

6. Vorrichtung nach Anspruch 5, **dadurch gekennzeichnet, dass** die Identifikationseinheit (30) eine Vermessungseinheit (31) aufweist, die dazu ausgebildet ist, Personen biometrisch zu vermessen, und dass die Weginformationseinheiten (20) Erkennungseinheiten (21) aufweisen, die Personen anhand von biometrischen Daten erkennen.

7. Vorrichtung nach Anspruch 5 oder 6, **dadurch gekennzeichnet, dass** die Weginformationseinheiten (20) Kommunikationsschnittstellen (24) für Identifikationseinrichtungen aufweisen.

8. Vorrichtung nach einem der Ansprüche 5 bis 7, **dadurch gekennzeichnet, dass** die Weginformationseinheiten (20) nach Erreichen der Destination (D) Weginformation (W0, Wn) anzeigen, die den Rückweg der Person betrifft, indem die Weginformation (W0, Wn), die zentral für alle Personen in einem Speicher (12, 13, 14) der Zentraleinheit (10) gespeichert ist, hierzu jeweils aus dieser Zentraleinheit (10) beziehbar ist.

9. Vorrichtung nach einem der Ansprüche 5 bis 8, **dadurch gekennzeichnet, dass** die Weginformationseinheiten (20) dazu ausgebildet sind, die Weginformation (W0, Wn) grafisch oder akustisch anzuzeigen.

## Claims

1. A method for displaying path information (W0, Wn) for persons within a predetermined area, with path information units (20) being provided at a plurality of points of orientation, comprising the following steps:
- identification of a person and determination of at least one destination (D) to which the person shall be guided;
- detection of the person at least at one path information unit (20);
- display of information (W0, Wn) on the further path of the person to the desired destination (D), **characterized in that** the automatic identification of the person occurs in a contactless manner by reading in a voucher by means of a recognition unit (21) of the path information unit (20), with the voucher carrying a two-dimensional barcode and the path information (W0, Wn) being derived automatically from the personal data which are obtained by identification of the person, such that the path information (W0, Wn) which is stored centrally for all persons in a memory (12, 13, 14) of a central unit (10) is retrieved for this purpose from said central unit (10), and with the two-dimensional barcode being transmitted as an image data record to a mobile phone and the display of said mobile phone is used further as an identification device.

2. A method according to claim 1, **characterized in that** the person is additionally measured biometrically during identification.

3. A method according to one of the claims 1 to 2, **characterized in that** after reaching the destination (D) path information (W0, Wn) is displayed which relates to the way back and is obtained in each case for this purpose from the central unit (10).

4. A method according to one of the claims 1 to 3, **characterized in that** the path information (W0, Wn) is displayed acoustically and/or graphically.

5. An apparatus for displaying path information for persons within a predetermined area, comprising a central unit (10) in which the information on the topography of the area is stored, and a plurality of path information units (20) provided at points of orientation, with at least one identification unit (30) being provided in order to identify the person and to read in a destination (D), and with the path information units (20) being arranged to detect the person and comprise a display unit (22) in order to display information (W0, Wn) after the detection on the further route of the person to the desired destination (D), **characterized in that** the path information units (20) comprise communication interfaces (24) for contactless data transmission with the identification devices, which are reader devices for two-dimensional barcodes, and comprise an allocation unit which derives path information in an automated manner from the personal data which are obtained by the identification of the person, such that the path information (W0, Wn) which is stored centrally for all persons in a memory (12, 13, 14) of a central unit (10) can be retrieved for this purpose from said central unit (10), with the identification of the person occurring by way of reading in a voucher which carries a two-dimensional barcode, and with said two-dimensional barcode being transferable as an image record to a mobile phone, so that the display of the mobile phone can be used further as an identification device.

6. An apparatus according to claim 5, **characterized in that** the identification unit (30) comprises a measurement unit (31) which is arranged to measure persons biometrically, and the path information unit (20) comprises recognition units (21) which can recognize persons on the basis of biometric data.

7. An apparatus according to claim 5 or 6, **characterized in that** the path information units (20) comprise communication interfaces (24) for identification devices.

8. An apparatus according to one of the claims 5 to 7, **characterized in that** the path information units (20) display path information (W0, Wn) after reaching the destination (D) which relates to the way back for the person, such that the path information (W0, Wn) which is stored centrally for all persons in a memory (12, 13, 14) of a central unit (10) can be retrieved for this purpose in each case from the central unit (10).

9. An apparatus according to one of the claims 5 to 8, **characterized in that** the path information units (20) are arranged to display the path information (W0, Wn) graphically or acoustically.

## Revendications

1. Procédé pour l'affichage d'informations de trajet (W0, Wn) concernant des personnes dans une zone prédéterminée, dans lequel des unités d'information de trajet (20) sont fournies en une pluralité de points d'orientation, comprenant les étapes suivantes :
- identification d'une personne et détermination d'au moins une destination (D) vers laquelle la personne doit être guidée ;
- saisie de la personne dans au moins une unité d'information sur le trajet (20) ;
- affichage d'informations (W0, Wn) sur la suite du trajet de la personne jusqu'à la destination souhaitée (D) ;
**caractérisé en ce que** l'identification de la personne par elle-même s'effectue sans contact par lecture d'un justificatif au moyen d'une unité de reconnaissance (21) de l'unité d'information sur le trajet (20), lequel justificatif porte un code à barres à deux dimensions, et les informations de trajet (W0, Wn) sont tirées automatiquement des données personnelles obtenues par l'identification de la personne, en utilisant pour cela les informations de trajet (W0, Wn) enregistrées de façon centralisée pour toutes les personnes dans une mémoire (12, 13, 14) d'une unité centrale (10) qui sont tirées de cette unité centrale (10), et dans lequel le code à barres à deux dimensions est transmis sous la forme d'un ensemble de données d'images à un téléphone portable et l'affichage de ce téléphone portable sert, par la suite, de dispositif d'identification.

2. Procédé selon la revendication 1, **caractérisé en ce que** la personne fait en outre l'objet d'un examen biométrique lors de l'identification.

3. Procédé selon l'une des revendications 1 à 2, **caractérisé en ce que** lorsque la destination (D) est atteinte, des informations de trajet (W0, Wn) concernant le trajet de retour et tirées de cette unité centrale (10) sont affichées.

4. Procédé selon l'une des revendications 1 à 3, **caractérisé en ce que** les informations de trajet (W0, Wn) sont présentées sous forme sonore et/ou graphique.

5. Dispositif pour l'affichage d'informations de trajet concernant des personnes dans une zone prédéterminée, avec une unité centrale (10) dans laquelle sont enregistrées des informations sur la topographie de la zone et avec une pluralité d'unités d'information sur le trajet (20) fournies à des points d'orientation, dans lequel est prévue au moins une unité d'identification (30) pour identifier la personne et lire une destination (D), et dans lequel les unités d'information sur le trajet (20) sont conformées pour détecter la personne et présentent une unité d'affichage (22) pour afficher après la saisie des informations (W0, Wn) sur la suite du trajet de la personne jusqu'à la destination (D) souhaitée, **caractérisé en ce que** les unités d'information sur le trajet (20) possèdent des interfaces de communication (24) pour la transmission sans contact de données avec les dispositifs d'identification, à savoir un dispositif de lecture pour des codes à barres à deux dimensions, et comprend une unité d'affectation qui dérive automatiquement les informations de trajet de données personnelles obtenues par l'identification de la personne par le fait que les informations de trajet (W0, Wn) enregistrées de façon centralisée pour toutes les personnes dans une mémoire (12, 13, 14) d'une unité centrale (10) peuvent être obtenues pour cela dans cette unité centrale (10), l'identification de la personne s'effectuant par lecture d'un justificatif qui porte un code à barres à deux dimensions et ce code à barres à deux dimensions pouvant être transmis sous la forme d'un ensemble de données d'image à un téléphone portable, de sorte que l'affichage du téléphone mobile peut être utilisé par la suite comme dispositif d'identification.

6. Dispositif selon la revendication 5, **caractérisé en ce que** l'unité d'identification (30) comprend en outre une unité d'examen (31) conçue pour procéder à un examen biométrique de la personne, et **en ce que** les unités d'information sur le trajet (20) comportent des unités de reconnaissance (21) pour reconnaître les personnes à l'aide de données biométriques.

7. Dispositif selon l'une des revendications 5 ou 6, **caractérisé en ce que** les unités d'information sur le trajet (20) comportent des interfaces de communication (24) pour des dispositifs d'identification.

8. Dispositif selon l'une des revendications 5 à 7, **caractérisé en ce que** les unités d'information sur le trajet (20) affichent, lorsque la destination (D) est atteinte, des informations sur le trajet (W0, Wn) concernant le trajet de retour de la personne par le fait que les informations de trajet (W0, Wn) enregistrées de façon centralisée pour toutes les personnes dans une mémoire (12, 13, 14) d'une unité centrale (10) peuvent être obtenues pour cela dans cette unité centrale (10).

9. Dispositif selon l'une des revendications 5 à 8, **caractérisé en ce que** les unités d'information sur le trajet (20) sont conçues pour donner les informations sur le trajet (W0, Wn) de façon graphique ou sonore.
